# EUROPEAN PATENT SPECIFICATION

(11) **EP 2 739 891 B1**
(45) Date of publication and mention of the grant of the patent: **19.07.2017**
(21) Application number: 12820785.9
(22) Date of filing: 01.08.2012
(51) Int. Cl.: F16L 33/207

(54) **END CONNECTOR FOR HIGH PRESSURE HIGH TEMPERATURE REINFORCED RUBBER HOSE**
ENDVERBINDER FÜR HOCHDRUCK- UND HOCHTEMPERATUR-VERSTÄRKTEN GUMMISCHLAUCH
RACCORD D'EXTRÉMITÉ POUR TUYAU EN CAOUTCHOUC RENFORCÉ À PRESSION ÉLEVÉE ET TEMPÉRATURE ÉLEVÉE

(30) Priority: 03.08.2011 US 201161514596 P
(43) Date of publication of application: 11.06.2014
(73) Proprietor: George Myer Company, Inc., Houston, TX 77223-0014 (US)
(72) Inventor: BALDWIN, Gardner, T., Houston, TX 77223-0014 (US); DELEON, Victor, J., Houston, TX 77223-0014 (US); SWEENEY, Larry, M., Houston, TX 77223-0014 (US)
(74) Representative: White, Nicholas John
(86) International application number: PCT/US2012/000339
(87) International publication number: WO 2013/019274

(56) References cited:
- WO-A1-2010/098833
- WO-A1-2010/098833
- US-A- 4 564 223
- US-A1- 2008 238 090
- US-A1- 2011 068 572
- US-B2- 7 338 090
- US-B2- 7 338 090

## Description

### Technical Field of the Invention

The present invention relates generally to the reinforced rubber hose industry and in particular to swaged hose couplings used to terminate large diameter high pressure flexible reinforced rubber hose used in the energy, marine, petrochemical and like industries, and which is specifically designed for use in high temperatures in which the rubber softens under temperature and begins to creep.

### Background of the Invention

High-pressure rubber hose is used in many instances in industry, but particularly in the mining, construction, energy, marine and petrochemical industries. Flexible rubber hose is used to transfer fluids under various pressures and temperatures between two points; one or both of which may move relative to each other or to another fixed point in space. Current use of these rubber hoses is beginning to use higher and higher liquid transfer temperatures which affect the reinforced rubber hose dramatically. Essentially, the rubber begins to soften under high temperature and creeps; thereby, making the entire hose system problematic.

Piping at the two points is generally metal (or some other form of fixed conduit), and the flexible hose must attach to the piping at both ends. This requires a coupling on each end of the hose.

In the drilling industry, a flexible rubber hose runs between the pump piping system on the rig and the kelly which is coupled to the rotating drill string. The pump system forces drilling fluid down the center of the drill pipe and back through the wellbore, in order to flush cuttings from the wellbore (plus providing wellbore stability, etc.). In this instance, the flexible hose is subjected to high pressures. The high pressure is required to both transfer drilling fluid into the wellbore and overcome static return head pressures - the deeper the wellbore, the higher the pressure.

The rotary drilling hose is subject to further stress in that it hangs down within the derrick supported at either end by the metal coupling on the hose and the fact that the kelly is moved up and down literally thousands of times during the drilling operation. This means that the hose is subject to stress at the metal coupling (in addition to being subject to stress throughout its length). Thus, a highly reliable bonding between the hose and the coupling is required for protection of personnel and equipment and to hold pressure. If the hose breaks loose from the coupling, it could easily fall and cause severe damage on the drill floor of the rig. In a similar manner, if the hose breaks, circulation may be lost resulting in a well blowout.

In order to obtain a high-pressure flexible rubber hose (the term rubber is used generally and does not specifically mean natural occurring rubber gum) a hose manufacturer incorporates a reinforcing material. Thus, the hose will consist of an inside sealing membrane - the fluid tight element or an inner tube, a reinforcing element, an outer rubber element, and finally some sort of abrasive resistant covering. The inner tube can be rubber, nylon, plastic, corrugated metal or similar type materials. The reinforcing element can be polyester or similar organic material, carbon fiber or similar high technology material or metal (steel) generally in the form of wire or cable. The reinforcement generally is used in multiple layers called "plys" and is usually made of high tensile steel.

There are different types of reinforcing employed by the hose manufacturer that is set down in even layers - i.e., 2 layers, 4 layers, 6 layers, etc., and grading systems are used to specify burst pressures for hose. For example, in the rotary drilling industry, grade C hose has a minimum burst pressure of 10,000 psi, grade D hose has a minimum burst pressure of 12,500 psi, and grade E hose has a minimum (guaranteed) burst pressure of 18,750 psi. Grade C and D hose are 2 ply hose, although there is some 4 ply D hose. Most grade E hose is 4 ply. Swage end connectors are currently available for two ply hose and therefore the burst pressure range for C and D hoses is covered by the current art except at high temperature where the effect of rubber creep causes the connector to fail. (The objective of this invention.)

Generally a hose manufacturer manufactures flexible hoses to specific order by the purchaser, who specifies length, diameter, pressure, service ratings and required end connections. These flexible hoses are generally referred to as a *"hose assembly with end connectors"* or *"a built-up hose assembly.* " This term is used throughout the industry.

In a built up hose assembly with end connections, the manufacturer, during the course of manufacturing, terminates the rubber hose into a metal fitting (the end connector) as specified by the purchaser. Thus, the manufacturer would make the inner rubber membrane (1st Carcass) and its associated inner seal layer (tube) and terminate this assembly in the end connector. The manufacturer would then add the wire reinforcement, as needed, terminating each reinforcing wire (or cable) in the end connector. Two techniques are typically employed by hose manufacturers for terminating the wire reinforcing in or on the end connector itself but are beyond the scope of this discussion. Finally the outer rubber layer (2^{nd} Carcass) and outer cover (cover) would be formed about the reinforcing wire or cable and the overall product vulcanized to achieve a cohesive product. It should be noted that high temperature rubber creep will occur in built-up hoses leading to failure at elevated temperatures.

It takes time to manufacture a hose assembly with built-up end connections, and often such a hose is needed almost immediately by industry. In order to service this demand a separate industry termed the local market distributor has evolved. The local market distributor keeps bulk reinforced hose - hose without connectors - in inventory. The purchaser would specify the hose requirements - diameter, length, pressure rating and end connectors - to the local market distributor. The local market distributor then takes bulk reinforced rubber hose from inventory, cuts the hose to required length, and places a coupling on each end of the hose. Bulk hose is available in varying lengths from a hose manufacturer, and the actual bulk length (between 90 feet [27m] and 110 feet [34m]) will depend on the mandrel used by the manufacturer.

The resulting hose is called a SWAGED or CRIMPED HOSE, depending on the method used to "place" the end connector onto the hose, where the term "place" is being used to include both swaging and/or crimping operations. It should be noted that swaging and crimping accomplish similar end results.

The current state of the art in swaged (or crimped) connectors has evolved to using an outer ferrule with nodes (internal ridges) that are compressed around the end of a reinforced hose about a stem that is inserted into the end of the hose. The stem may or may not have barbs that are meant to improve the "grip" between the hose and the end connector. Often, the outer layer of hose rubber is "skived" which means that the outer layer of rubber is removed exposing the reinforcement (although some local distributors do not skive).

The reinforced hose is actually held in the end connector by the ridges of the ferrule gripping the reinforcement via compression of the hose against the stem. The compression operation (swaging or crimping) of the ferrule against the reinforcement and against the inner stem creates severe stress and strain within the inner tube.

Development of high pressure swaged end connectors for rubber hose has extended over a period of years and the art runs the gauntlet from low temperature and/or low pressure to high temperature and/or high pressure applications: except that the high temperatures are becoming higher, particularly in the drilling industry as wells become deeper. Hose diameters vary, and the manufacturers/providers of connectors realize that the pump-off force on the fitting is proportional to the inside diameter of the hose and the applied pressure.

As explained in U.S. Patent 7,388,090 to Baldwin et at., most of the standard prior art uses a serrated stem that has backward facing teeth that grips the inner liner of the hose to retain the stem in the hose. Further the art also uses a series of ridges within the ferrule that bite into the outer layer of the hose and the reinforcement and supposedly causes the teeth (or barbs) of the stem to bite further into the inner lining.

Baldwin et al. explain that the standard art may cause severe failure of the reinforcing cable (or wire) because the sharp edges of the connector damage the reinforcement. In order to overcome this basic failure Baldwin et al. proposed an invention that consisted of a "waved" ferrule and stem that joins an end connector to flexible reinforced rubber hose thereby forming a "double sine-wave lock" between the ferrule and the stem, but mainly the lock forms within the ferrule (see U.S. 7,388,090). The ferrule and stem are welded together at the coupling end leaving an opening, which accepts the reinforced rubber (elastomer) hose in almost the same manner as a normal "ridged" ferrule and "barbed" stem fitting. Rather than having straight sides, the "ridges" of the ferrule and high points of the stem have a sinusoidal shape - a wave. The wave pattern has the appearance of ripples on a pond caused by throwing a stone into the water.

The 'double sine-wave lock' invention locks all the plys of hose reinforcement inside the end connector, between the stem, the inner carcass, the reinforcement, and the ferrule, in a sine wave compressed against the ferrule and the stem to give the fitting an overall strength that is in excess of the strength of the free standing hose (without end connectors) whether or not the hose is under pressure. Grade E hose has a minimum burst pressure of 18,750 psi; thus the instant device, when used with grade E hose will have an overall strength greater than 18,750 psi. (At these pressures the pump-off forces involved reach or exceed 240,000 pounds_{force} depending on the cross sectional areas.) The invention carefully considers the material forming the ferrule and stem and the relative movement of those materials while attaching the end connector to the hose along with the unpredictable qualities of rubber and flexible hose construction to minimize induced stress in the hose reinforcement and the inner tube. All of these factors, including the sinusoidal shape of the ferrule and stem and the preferred two-step method of attachment (internal expansion of the stem followed by external swaging of the ferrule), operate together to form the original Baldwin et al. invention.

In overall summary, the original Baldwin et al. 'double sine-wave lock' invention utilizes a sinusoidal wave-like lock within a ferrule and stem to lock the reinforcement plys and the hose into the end connector by compressing the hose (including the inner carcass) and reinforcement between the waved ferrule and waved stem. Stress and strain on the reinforcement and the tendency for the reinforcement to tear (or pull away) from the rubber hose is minimized by carefully reducing the relative axial displacement between the ferrule and stem that always occurs during the attachment operation. The relative axial displacement is minimized by using high tensile strength steels, minimum un-attached clearances between the hose and end connector, and careful design of the node, lands grooves and flutes to cause a sine like wave while minimizing the radial thickness of the stem and ferrule at the critical cross-sections and considering the resulting strength of the attached fitting.

The Baldwin 'double sine-wave lock' has proven to work with any cable or wire high pressure reinforced hose and has in fact replaced the 'built-up' hose with end connectors, because the hose that utilizes the Baldwin double sine-wave end connector will not fail between the hose and the end connector. Any failure of the hose under pressure will be in the hose itself. The end connector will not come loose from the hose: this statement cannot be made regarding all built-up hoses. Thus, the 'double sine-wave lock' Baldwin end connector has improved safety in the workplace. No longer will a hose come loose and flop all over the area damaging equipment and injuring personnel. However, as good as the original Baldwin connector is, **it is subject to high temperature rubber creep and therefore its use is limited by fluid temperature.**

In a related improvement to the Baldwin sine-wave lock, the inventors wondered if such a two step process was needed, and if large (relatively) lands and grooves were required on the stem. It was known that the actual lock occurred between the ferrule and the reinforcement with some minimal lock (transfer of pump-off force) between the stem and the inner tube onto the reinforcement. If a stem could be designed with small bumps and if a connection step could be eliminated an improved device would result. More importantly, the removal of the expansion step would reduce the amount of material movement within the hose during the expansion/swaging process. With the reduction of material movement within the hose itself, an improved seal and lock could result with a reduction in induced stress. Such a device would work well with the new European light weight high pressure reinforced rubber hose. This hose uses wire reinforcement and uses a much thinner inner tube. The inner tube is the non-leaking flexible conduit through which a high pressure fluid passes. The expansion force is transferred to the reinforcement which prevents the inner tube from bursting. In order to reduce the overall hose weight, manufacturers are using a thin tube and a thin outer cover with multiple spiral-wire reinforcement. As these materials become thinner, the requirement that movement between the components of the hose, (i.e., the inner tube, reinforcement and outer carcass) becomes more critical.

In the most recent series of patent filings (see the above paragraph), Baldwin et al. have discovered that the lands/flutes or node/grooves that are on the stem may be reduced in size and severity. In fact, the severity of the flutes and grooves in the stem has been reduced to a series of matching small bumps, which, when the connector is swaged onto the hose, cause the sine-wave interlock to occur. This technique has been commercially successful and works well at low to medium temperatures for thin wall small diameter hoses. In fact, the key commercial success has been the removal of internal expansion step, which results in less stress on the inner tube and reinforcement. This improvement has been described in the Baldwin et al. U.S. Provisional Application 61/208,531 (filed 25 February 2009), the PCT Application PCT/US2010/000520 (WIPO WO/2010/098833 - 2 September 2010), U.S. National Application 13/138,182, and other national applications throughout the world. It should be noted that *this* disclosure claims priority from U.S. Provisional 61/514,596 (filed 3 August 2011) which itself is a continuation-in-part of U.S. Provisional 61/208,531.

However, the problem of rubber creep at elevated temperatures continued to cause problems, particularly in applications required to meet some of the new API standards for drilling hose. The inventors found that much to their chagrin, single skived hose (where just the outer cover is removed to expose the reinforcement) will not hold in place as the temperature is raised and the rubber within the hose starts to creep. Furthermore, they discovered that simple internal grippers, without a technique to reduce induced stress on the reinforcement would not solve the issue. Thus, there remains a need for an end connector that will securely grip the reinforcement of a reinforced rubber hose, thereby transferring all the pump-off forces to the metal - both the end connector and the reinforcement, but at the same time retaining any 'creeping' rubber or elastomer within the connector/hose assembly thereby assuring a leakproof, highly reliable, and SAFE assembly.

### Summary of the Invention

The invention consists of a series of improvements to the sine-wave lock disclosed in U.S. 7,338,090 to Baldwin et al, wherein the series of improvements are the addition of a series of hose reinforcement grippers within the first section of the end connector (starting at the welded or beveled end of the connector) which form a metal to metal contact with the reinforcement, the addition of an inner tube dam, the addition of the standard Baldwin et al. sine-wave lock in the middle end, and the slightly modified (from U.S. 7,338,090) end section of the connector towards the hose end of the connector. The reinforcement grippers actually grip the hose reinforcement on both sides of the metal reinforcement: this requires "double skiving" or "internal skiving and external skiving" of the reinforced rubber hose. Furthermore the reinforcement grippers are sloped so that the pressure directly exerted on the reinforcement reduces (or tappers-off) going from the open end of the connector towards the hose end of the connector within the hose held by the connector.

The remaining portion of the "standard" Baldwin et al. sine-wave lock concept not only continues to retain the hose within the connector, but also acts to reduce inner tube creep and tearing of the inner tube thus preventing leakage of internal fluids. In addition the incorporation of the improvement in the tapering section of the connector where the end connector meets the outside of the rubber hose continues to reduce creep. The inner tube dam (a key feature) prevents inner tube creep into the reinforcement grippers. The inner tube dam and the improved tapering section act to prevent leakage of internal fluids because both the inner tube and the outer carcass are not allowed to creep. There is both COLD and HOT creep found in the hose: cold creep occurs during and somewhat after the swaging operation, and hot creep occurs when the hose is subjected to high temperature. The stem and ferrule are connected together by a suitable process, such as welding.

The end connector is joined to the reinforced hose in the standard manner which involves skiving the outer jacket plus skiving the inner tube. The two skives are not the same length; however, the outer skive is the same as required for the standard Baldwin et al. device. The inner skive is only as long and the length of the 'internal grippers.' The hose is carefully placed within the end connector cavity formed between the ferrule and the stem to the point where the skived hose (inner and outer) rests within the 'internal gripper' section and the end of the inner tube rests just past the last flute and within the last land at the termination end of the connector abutting the dam. The fitting is then preferentially double swaged onto the hose by first expanding the stem and then compressing (or swaging) the ferrule. The additional step of first internally expanding and then swaging, reduces the stress on the reinforcement and the inner tube, and further reduces cold rubber creep. (The reader must remember that the reinforcement used in rubber hose is a high tensile strength material, and, as such, it does not react "pleasantly" to pinching. Pinching may cause strain in the reinforcement material which will result in failure under pressure.) The "sloped" interacting grippers exert a varying force on the reinforcement with the greatest force applied at the open end of the hose varying to a minimum force away from the open end.

As the double swaging process occurs, the flutes on the stem create an offset force which causes the reinforcing to expand into the nodes of the ferrule forming the sine-wave lock between the reinforcement and the lands and nodes of the ferrule, and the grippers come into lock with the reinforcement. The double swaging step ensures that, in an alternate embodiment, the internal grippers will first gently pull into the reinforcement during expansion of the stem. Then, as the final swage occurs, the grippers will pull into the reinforcement without damaging the reinforcement applying a minimum lock away from the open end of the hose and a maximum lock at the open end of the hose due to the sloped nature of the grippers in the ferrule. A further internal gripper alternate embodiment may take advantage of the proven sine-wave lock concept employed in the single skived section of the connector and the grippers may be modified accordingly. Similarly, in the section of the hose which is only single skived, the sine-wave lock follows throughout the hose. (It should be noted that the sine-wave lock looks very much like a modified (sine x)/x function: i.e., it is not a perfect sine-wave.)

The stem may be coated, during manufacture or at any time, with a friction reducing material that allows the inner tube of the reinforced hose to more freely slide along the stem during the process that swages (or crimps) the connector to the hose.

In summary, the instant invention utilizes a metal to metal lock between the ferrule, the reinforcement of the hose, and the stem which couples the pump off force to the connector. In addition, the inner tube dam prevents creep of the inner tube elastomer towards the outboard end (open end) of the connector and thus into the reinforcement gripper section. Finally the sinusoidal lock between the ferrule, reinforcement, inner tube and stem coupled with the improved transition to the hose at the hose end (inboard end) of the connector further serve to reduce creep of the inner tube and outer carcass of the hose.

### Brief Description of the Drawings

Figure 1 shows the cross-section of a typical two-ply cable reinforced flexible rubber hose.
Figure 2 shows a cross-sectional view of the current state of the art end standard connector with an NTP termination. (This is an old-style connection in use for many decades.)

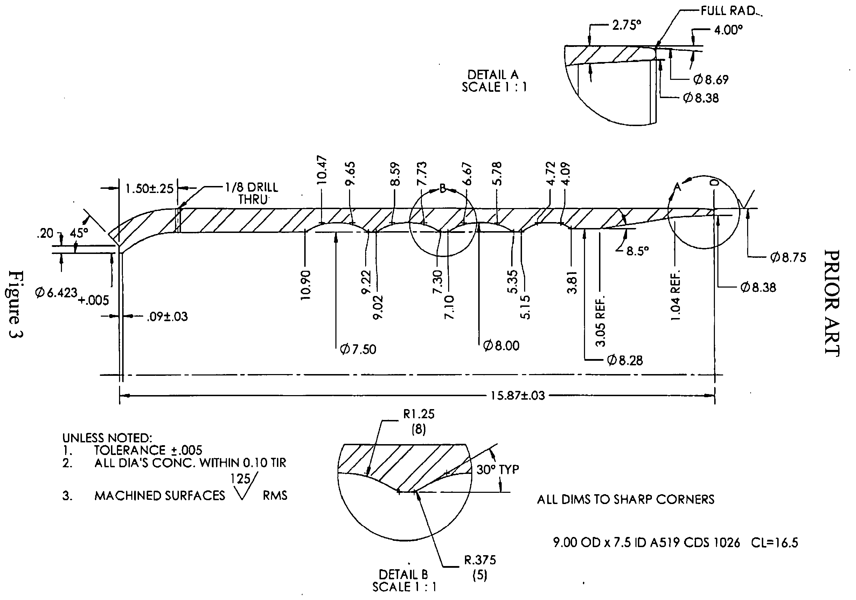

Figure 3 shows a cross-sectional view of the ferrule used in the advanced current state of the art 'double lock sine-wave' end connector. (The 'double lock sine-wave' end connector has been in use for the past five years.)
Figure 4 shows a cross-sectional view of the stem used in the advanced current state of the art 'double lock sine-wave' end connector.
Figure 5 shows the cross-sectional view of the ferrule used in the instant invention, being a general improvement to the 'double lock sine-wave' connector and forming a single lock sine wave within the overall device throughout the reinforcement. (Note the similarities between Figures 3 and 5 while noting the 'gripper section.')
Figure 6 shows the cross-sectional view of the stem used in the instant invention, being a general improvement to the 'double lock sine-wave' connector. (Note the similarities between Figures 4 and 6 while noting the 'gripper section,' but noting that the barbs on the stem in Figure 4 are not present on the stem of Figure 6.)
Figure 7A is conceptual drawing of the instant device with internal expansion showing the various "interaction zones" between the ferrule and the stem.
Figure 7B is similar to Figure 7A and is an alternate embodiment without internal expansion.
Figure 8 shows the instant device before any expansion or swaging takes place with the double skived hose partially inserted into the connector.
Figure 9 shows the instant device before any expansion or swaging takes place with the double skived hose fully inserted into the connector. Note how the inner tube rests against the inner tube dam in the stem.
Figure 10 shows the instant device fully expanded and swaged. Note the 'sine-wave' lock obtained between the ferrule, the reinforcing wire, and the stem in the gripper section and the sine-wave lock obtained between the ferrule, reinforcement and inner tube, and stem in the remaining section of the end connector. Note how the nodes in the ferrule align with the flutes on the stem as the stem expands and as the ferrule contracts under the two-step swaging operation.

### Description of the Preferred Embodiment

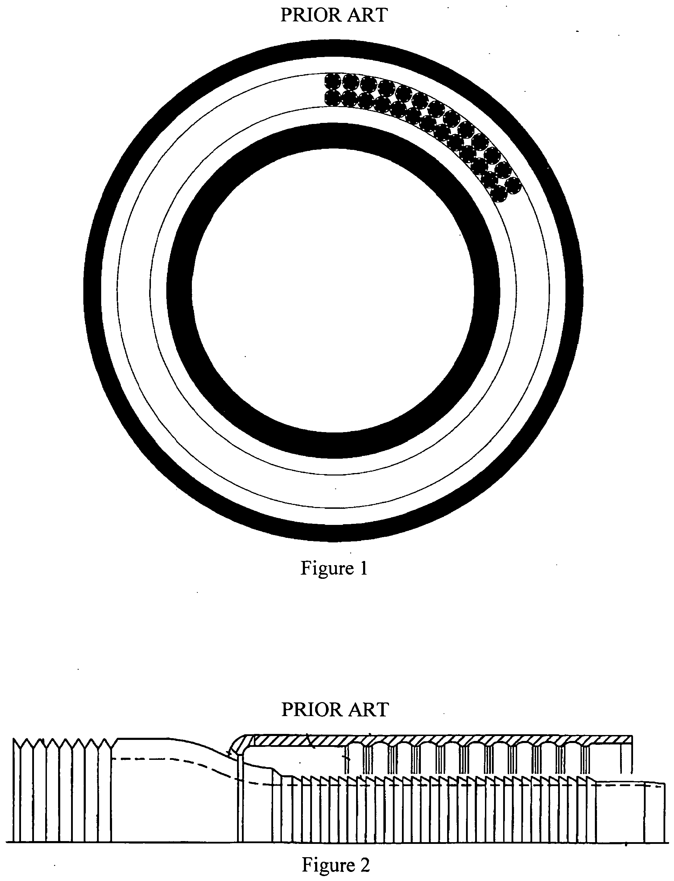

Figure 1 shows a standard weight schedule D cable two-ply reinforced hose. Schedule E hose will generally have 4 interlocking reinforcing plys. Not shown is a cross-section of a European light weight wire reinforced hose; however, it would be similar to Figure 1, except there would be 6 interlocking wire plys, and the inner tube will comprise one thin layer rubber.

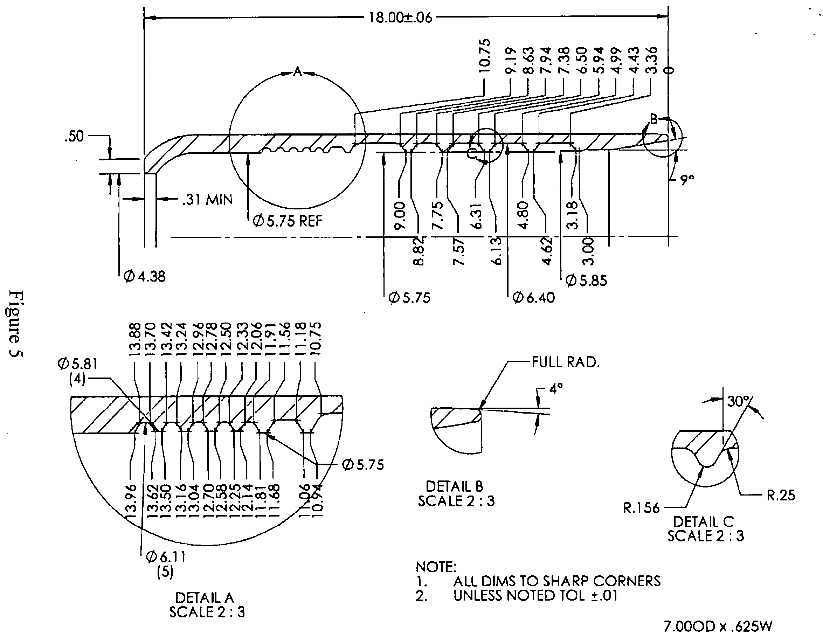

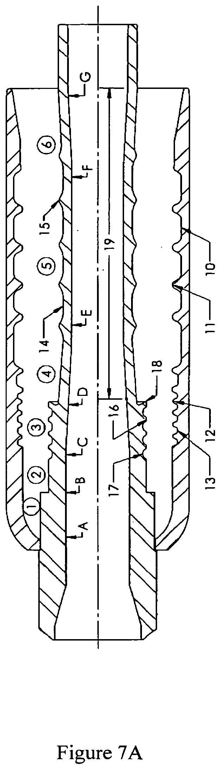

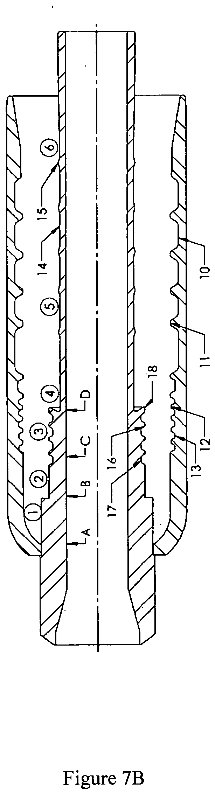

A prototype of the instant invention is shown in Figures 7, and the ferrule of a prototype of the preferred invention is shown, in cross-section, in Figure 5 and is machined from 7.00^{ϕ} x 5.75^{ϕ} Schedule 80 Pipe. It must be understood that the dimensions given are for one particular size of connector and these dimensions will vary depending on the connector size. One end (the end that will be welded to the stem) is placed in a Roll Die and compressed to form a narrower neck as shown at the far left in Figure 5. The inside of the ferrule is machined to produce a series of nodes, **10,** and lands, **11,** (five-total are shown). The nodes all have the same radial height measured from the axial center line of the ferrule being 6.40^{ϕ}. The first four lands, or high points, (counting from the hose end of the ferrule) have a radial height of 5.75^{ϕ}, and the final land has a height of 5.85^{ϕ}. The lands are NOT axially spaced equidistantly along the ferrule. This is because it is known that as the ferrule is swaged (beginning from the hose end or inboard end), the ferrule will move axially towards the hose end of the fitting until the reinforcement locks between the ferrule and the stem. The actual lock will not start to occur until the swage die is about midway along the ferrule. Up to this point the inner tube and hose is free to move axially in either direction within the fitting. When lock occurs, all movement of the inner tube and hose will be towards the termination (outboard) end of the fitting.

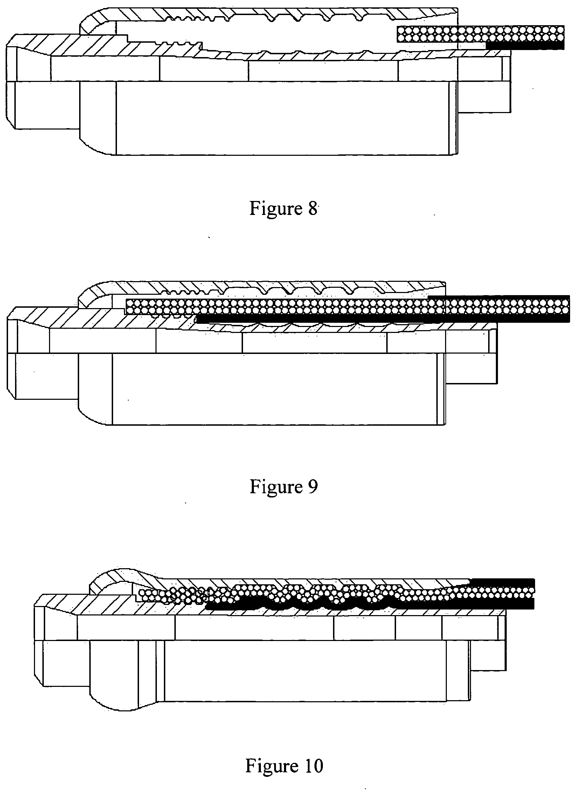

Simple mechanical calculations based on material properties and the degree of swaging that will be applied allow the designer to calculate the land spacing so that after the fitting is swaged to the hose, the flutes of the stem, **15,** will fall approximately midway inside the nodes, **10,** of the ferrule and vice-versa for the lands, **11,** of the ferrule falling approximately midway inside the grooves, **14,** of the stem. (See Figure 10.) The manner in which the final position of the flutes/lands at approximately midway within the nodes/grooves is the key to this device and how it obtains the sine-wave lock between the reinforcement and the ferrule. This concept is found in the original Baldwin patent and is used in conjunction with grippers to obtain a liquid tight, temperature independent, high pressure swaged end connector.

The dimensions of the nodes and land heights must not be read as a restriction but as a sample. Similarly, the land spacing shown must not be read as a restriction but as a sample. Under some circumstances (larger diameter hose), it may be necessary to adjust these dimensions (and number) so that they vary with distance from the welded end of the connector forming an overall slope. Further the materials of construction must not be as a limitation but as an example.

At the end of the connector nearest the hose, the inside diameter of the ferrule is increased so that when the ferrule is swaged minimum pressure will be exerted on the outer rubber and outer covering (the outer carcass). This particular improvement inhibits creep at the hose end (inboard) which is rounded as shown.

Turning now to the left end (nearest the connection - away from the hose) of the ferrule, there are a series of six ferrule grippers (having teeth, **12,** and valleys, **13**). The six teeth, in the prototype, actually vary in height from 5.75^{ϕ} to 5.81^{ϕ} while the ferrule valleys vary from 6.11^{ϕ} to 6.17^{ϕ}. (One embodiment considers the sine-wave lock concept used in the midsection of the instant device.) The teeth will now be able to exert a varying force on the reinforcement thereby eliminating potential 'pinching' of the reinforcement which will result in failure of the hose under pressure. The teeth are all approximately the same width and the valleys between the first five teeth (counting from the left) are the approximately the same width; however, the valley between the fifth and sixth tooth is somewhat wider. (In the embodiment employing the sine-wave lock, the valley width will vary.)

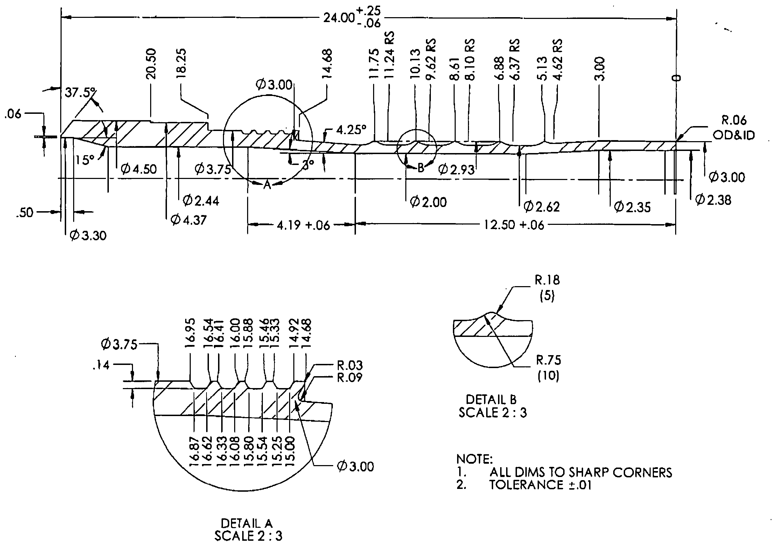

The stem of the corresponding prototype of the preferred invention is shown, in cross-section, in Figure 6, and is machined from 4.5^{ϕ} 4130 L80 Bar. Five flutes, **15,** (high points) are set at 2.93^{ϕ} and, like the lands on the ferrule, are NOT necessarily equidistantly machined in the stem. This is to allow for expansion (or relative movement) of the flutes during the internal expansion of the stem (similar to the movement of the lands and nodes on the ferrule during swaging). The grooves are set at 2.62^{ϕ}. Note that the flutes and grooves, **14,** are "set down" (lower - forming an elongated step, **19**) within this section of the stem which allows for radial movement when the stem is internally expanded. (I.e., the plug as it is drawn through the stem will expand the ID from 2.00^{ϕ} to approximately 2.38^{ϕ}, which is the dimension of the plug thereby forcing the flutes upwards into the hose and radially towards the ferrule.) The net result of internal expansion is to deform the elongated step, **19,** making the inside diameter of the stem consistent throughout.

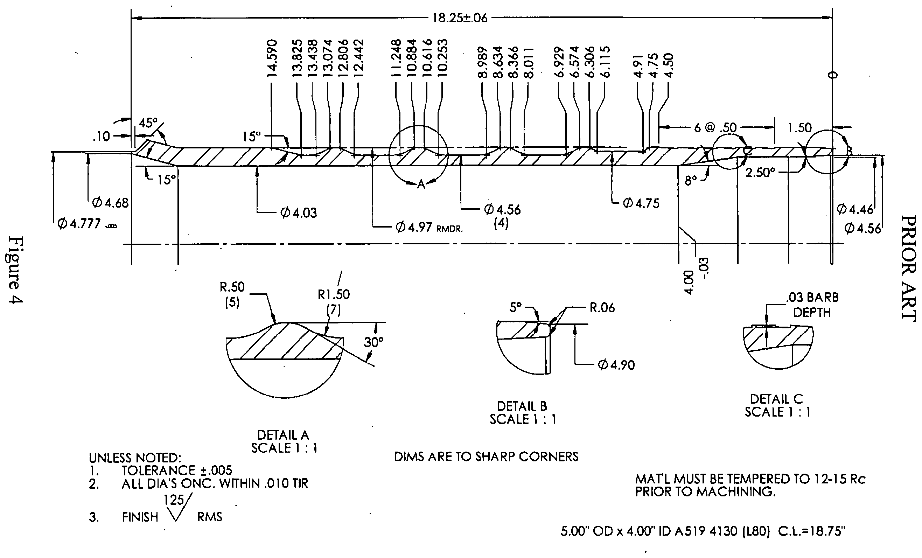

It should be noted that no barbs are used in the instant invention (unlike the original Baldwin device shown in figure 4). This is because the barbs are ineffective when the inner tube begins to creep under the effects of high temperature. The barbs are replaced with smooth O.D. which does not damage the inner tube, thus providing a better seal and reducing the effect of creep.

As explained above, the relative position of the flutes on the stem and the nodes on the associated ferrule is critical to forming the sine-wave lock between the ferrule and the reinforcement which reduces the potential of creep when the inner tube is subjected to high temperature.

Moving towards the left in Figure 6 (and in composite Figure 7 where item numbers, regions and identifiers may be found) the stem has a series of four grippers comprising ridges, **16,** and hollows, **17.** The rightmost stem gripper ridge lies radially underneath the second ferrule gripper tooth and has a backward slope as it drops towards area **4** on the stem. This back slope forms the inner tube dam, **18,** to keep the inner tube rubber from oozing through the reinforcement grippers of area 3 when the hose is subjected to high temperature (a key point in the instant invention). The four stem gripper ridges may be rounded in order to minimize the possibility of damaging the exposed reinforcement. The hollows and ridges have equal heights and depths and the widths of the ridges and hollows are approximately the same.

It should be noted that in the region in which the flutes and grooves are employed the section of the stem forming the inside of the connector (where fluid flow is expected) is displaced. This is area **5** between region **E** and **G.** This is the area of the stem which will undergo internal expansion in order to start the sine-wave lock within area **5.** It should be noted that no internal expansion occurs in the gripper area **3.** An alternate embodiment that uses internal expansion in the gripper area may be employed and is not outside the scope of this disclosure.

Again, the dimensions given must not be construed as a restriction but as a sample. This is because dimensions will vary with the size of the fitting and the type of reinforced hose. Any engineer with knowledge of materials and swaging may readily make adjustments to this disclosure for varying sizes of fittings, hose, hose type and materials that could be used in the manufacturer of the fitting. In fact the size and position of the ridges, hollows, flutes and grooves should be chosen by trial and error to have a minimum height just so that the flutes and grooves cause the sine-wave lock of the reinforcement plys in the ferrule. The position of the flutes must be coordinated with the nodes of the ferrule so that after the two-step expansion and swaging operation, the sine-wave lock is obtained. A similar approach must be used when if the alternate sine-wave lock is used in the gripper section.

The ferrule of Figure 5 is welded to the stem of Figure 6 at the ledge (point **A**) on the stem. The weld is carefully inspected to assure quality. If the completed fitting is to be used in H₂S service, the fitting must be heat treated to reduce the possibly of hydrogen-sulphide stress cracking.

The fitting is permanently attached to a reinforced high pressure rubber hose using industry standard techniques - yet another plus for the device. The outer covering is skived to expose the reinforcement. The axial skive length is set by the axial length of the ferrule: one must make certain that approximately 1/2-inch of the outer cover falls under the hose end of the ferrule before swaging. The inner tube is also skived to expose the reinforcement, but only to allow the grippers on the stem to come in contact with the reinforcement (this distance is set by the length of the gripper section on the stem). The hose is then carefully placed within the cavity formed between the ferrule and the stem to butt up against the stop point (**B** in Figures 7). There is additional space from point **B** towards the end of the connect (region 1 shown in Figures 7) which allows for any expansion of the hose during the swaging operation.

As explained earlier, the preferred connection between the hose and the end connector is a two-step process starting with internal expansion of the stem (Figure 7A). A plug is drawn through the stem which expands the flutes towards the ferrule. This expansion starts the action of the sine-wave lock. Note, in the prototype described, that ONLY the section of the stem holding the flutes and grooves actually expands (unless the alternate internal expansion and/or sine wave lock embodiment is/are employed in the gripper section).

The second operation, namely the swaging operation, starts at the hose (inboard) end of the fitting and moves axially along the fitting to the termination (outboard) end. As the ferrule is swaged, it moves radially inward towards the stem and axially outward towards the hose. As the ferrule moves axially inward, the stem flutes act to displace all plys of the reinforcement into the nodes of the ferrule completing the sine-wave lock. At approximately midway along the ferrule (during swaging) the reinforcement at the hose end will lock in the form of a modified sine wave (following the shape of the ferrule). As the swaging operation continues, the ferrule will move axially away from the hose end of the fitting along with the hose. The sine wave lock progressively moves with the swage until swaging is stopped just past the point **B** (see Figures 7). A similar process will occur in the alternate sine-wave reinforcement gripper lock embodiment. Note Figure 7B shows the instant device without internal expansion and thus the first step (expansion) is omitted.

It must be understood that there is no mechanical lock between the inner tube of the hose and the stem. The mechanical lock occurs in the reinforcement gripper section of the connector. There is a secondary lock found between the nodes and flutes of the ferrule, in the form of a modified sine-wave, to the reinforcement. The inventive step is the realization that a series of sloped grippers interacting with the original Baldwin et al. sine-wave lock associated with an improvement to the termination area will serve to retain a high pressure-high temperature reinforced rubber hose inside a swaged end connector. The mechanical lock coupled with highly inventive inner tube dam and the modified sinusoidal wave lock in the body of the connector will inhibit elastomer creep within the reinforced hose (both the inner tube and the outer casing) during the swaging operation (COLD) under temperature (HOT). Thus, the series of cooperating inventive steps thereby ensure a leak-tight fitting at high temperature and pressure. The alternate gripper embodiment utilizing a sine-wave lock is a further inventive step. Thus the instant device is an improvement to the double-lock Baldwin device, adds to the art, and solves a critical industry problem - namely rubber creep during swaging and particularly under high operating temperatures.

Dimensions, materials of construction, the number of nodes/lands/flutes/grooves, and the number of ridges can vary with the size and duty of the hose assembly; thus, the disclosure given above must not be read as a limitation but as an example.

## Claims

1. An end connector for permanent attachment to reinforced hose having reinforcement, comprising: a stem having a coupling end, a hose end, an inside and an outside; a ferrule having an inside secured to said outside of said stem near said coupling end thereof extending concentrically about said stem towards said hose end thereof having sinusoidal gripping and sealing means resembling a modified (sine x)/x wave (10 and 11) formed within said inside of said ferrule and further having reinforcement gripper means (12 and 13) formed within said inside of said ferrule, and wherein said stem incorporates complementary modified (sine x)/x wave (14 and 15) formed on said outside of said stem for enabling said sinusoidal gripping and sealing means and further incorporates complementary reinforcement gripper means (16 and 17) formed on said outside of said stem and wherein said modified (sine x)/x wave comprises a series of nodes (10) and lands (11) axially machined within said ferrule and said complementary modified (sine x)/x wave comprise a series of nodes (14) and lands (15) axially machined on said outside of said stem and wherein said modified (sine x)/x waves are positioned such that as said end connector is swaged onto the reinforced hose, said modified (sine x)/x waves align to form said sinusoidal gripping and sealing means and further that as said end connector is swaged onto the reinforced hose said reinforcement gripper within said ferrule and said complementary reinforcement gripper on said stem interact to firmly grip the reinforcement of the reinforced hose and wherein said stem has an elongated step (19) formed within said inside of said stem for the purpose of interacting with an expansion plug thereby expanding said stem into the reinforced hose.

2. The end connector of claim 1 further comprising an inner tube dam (18) formed within said outside of said stem between said complimentary (sine x)/x wave (10, 11, 14 and 15) and said complementary reinforcement gripper means (12, 13, 16 and 17) for the purpose of inhibiting creep of the inner layer elastomer of the reinforced hose towards said coupling end.

3. The end connector of claim 1, wherein the ferrule having an inside secured to said stem near said coupling end of the stem and extending concentrically about said stem towards said hose end thereof thereby forming a circular cavity between said outside of stem and said inside of said ferrule and adapted to receive one end of the reinforced hose and wherein said cavity is divided into six zones, a first zone (1) adapted as an expansion area, a second zone (2) adapted as a stop and first gripping area, a third zone (3) adapted as second gripping area, a fourth zone (4) adapted as a third gripping area, a fifth zone (5) adapted as fourth gripping area and a sixth zone (6) adapted as a stress relief and termination area wherein said first zone (1) is located at said coupling end and said sixth zone (6) is located at said hose end with said second (2), third (3), fourth (4) and fifth (5) zones laying axially and in numerical order between said first (1) and sixth (6) zones and wherein said first gripping area (2) is adapted to crimp the reinforcement between said ferrule and said stem, wherein said second gripping area (3) is adapted to grip the reinforcement between said ferrule and said stem, wherein said third gripping area (4) is adapted to crimp the reinforcement and inner tube between said ferrule and said stem, wherein said fourth gripping area (5) is adapted to lock the reinforcement and inner tube between said ferrule and said stem in a modified sinusoidal wave between said ferrule and said stem, and wherein said stress relief and termination area (1) is adapted to gently terminate the hose within the end connector between the outer carcass and inner tube and wherein said second gripping area (3) comprises complementary mechanical lock means (12, 13, 16 and 17) between said ferrule, the reinforcement, and said stem.

4. The end connector of claim 3 wherein said fourth gripping area (5) comprises a modified sinusoidal locking means between said ferrule, the reinforcement, the inner tube, and said stem.

5. The end connector of claim 3 wherein the transition between said fifth (5) and sixth (6) zones assumes an acute angle thereby acting to restrain creep of the inner tube caused by high temperature fluids traveling within the reinforced hose.

6. The end connector of claim 3 further comprising an inner tube dam (18) located between said third (3) and fourth (4) zones for the purpose of inhibiting creep of the inner layer elastomer of the reinforced hose towards said coupling end.

7. The end connector of claim 6 wherein said sinusoidal locking means comprises a plurality of flutes (10) and lands (11) formed in said ferrule which complement a plurality of lands (14) and flutes (15) formed in said stem such that when said end connector is permanently attached to the reinforced hose the reinforcement assumes the shape of a modified sine wave thereby mechanically locking between said ferrule and said stem.

8. The end connector of claim 3 wherein the elongated step (19) is formed within said inside of said stem located essentially underneath said fourth (4) gripping area and extending partially underneath said fifth zone (5).

9. A high pressure reinforced hose assembly for use as a rotary hose comprising: a section of high pressure reinforced rubber hose having first and second ends, reinforcement, an inner elastomer layer, and an outer carcass; a first and second end connector as claimed in any one of claims 1 to 8, incorporating a ferrule and stem and having a sinusoidal gripping means (10, 11, 14 and 15) and reinforcement gripper means (12, 13, 16 and 17) formed between said ferrule and stem and wherein said first end connector is permanently attached to said first end of said hose incorporating a sinusoidal lock between said first end connector within the area of the reinforced hose containing the reinforcement and the inner elastomer layer at said first end of said hose and incorporating a reinforcement gripper lock to the reinforcement of said reinforced hose also at said first end of said hose and wherein said second end connector is permanently attached to said second end of said hose thereby forming a similar sinusoidal lock and a similar reinforcement lock between said second end connector and said second end of said hose.

10. The high pressure reinforced hose assembly of claim 9 wherein the hose is first skived before permanent attachment to the end connectors by removing a portion of the outer carcass and a portion of the inner elastomer layer thereby exposing the reinforcement and wherein the reinforcement comes into contact with said ferrule in the portions of the end connectors containing said sinusoidal gripping means (10, 11, 14 and 15) and wherein the inner rubber is in contact with said stem in the portion of the end connectors containing the sinusoidal gripping means (10, 11, 14 and 15) and wherein the reinforcement comes into contact with the reinforcement gripping means (12, 13, 16 and 17) in both said ferrule and said stem.

11. A high pressure reinforced hose assembly comprising: a section of high pressure reinforced hose having first and second ends, reinforcement, an inner tube, a reinforcement, an outer layer and cover forming an outer carcass; a first and second end connector as claimed in any one of claims 1 to 8, incorporating a ferrule and stem; and wherein the hose is first skived at both ends before permanent attachment to the end connectors by removing a portion of the outer carcass and inner tube thereby fully exposing the reinforcement thereby allowing the reinforcement to come in direct contact with said ferrule and said stem; and wherein an additional portion of the outer carcass is removed thereby only allowing the reinforcement to come in direct contact with the ferrule and wherein said connectors both have a plurality of gripping means formed between said ferrule and stem of which there is a first reinforcement gripping means (12, 13, 16 and 17) and second sinusoidal gripping means (10, 11, 14 and 15) separated by an inner tube dam (18); and wherein said first end connector is permanently attached to said first end of said hose thereby forming a mechanical lock between said first end of said hose and said first end connector at said first reinforcement gripping means (12, 13, 16 and 17) thereof directly to the reinforcement; and wherein said first connector is further permanently attached at said second sinusoidal gripping means (10, 11, 14 and 15) between said ferrule, reinforcement, inner tube, and stem thereby forming a sinusoidal lock; and wherein said second end connector is permanently attached to said second end of said hose thereby forming a mechanical lock between said first end of said hose and said first end connector at said first reinforcement gripping means (12, 13, 16 and 17) thereof directly to the reinforcement; and wherein said first connector is further permanently attached at said second sinusoidal gripping means (10, 11, 14 and 15) between said ferrule, reinforcement, inner tube, and stem thereby forming a sinusoidal lock.

12. The high pressure reinforced hose assembly of claim 11, said section of high pressure reinforced hose further having high temperature and high pressure ratings, wherein creep of said inner tube within said section of high pressure reinforced hose is inhibited by said inner tube dam (18) acting in conjunction with said sinusoidal lock within each of said end connectors thereby allowing said high pressure assembly to operate at the rated temperature and pressure of said section of reinforced hose.

13. The high pressure and high temperature reinforce hose assembly of claim 12 further having a stress relief and termination area (1) thereby providing further means to inhibit creep of said inner tube and said outer carcass.

## Patentansprüche

1. Endverbinder zur dauerhaften Befestigung an einem verstärkten Schlauch mit Verstärkung, umfassend:
eine Schaft mit einem Kupplungsende, einem Schlauchende, einer Innenseite und einer Außenseite;
eine Hülse, die eine Innenseite aufweist, die an der Außenseite des Schafts nahe dem Kupplungsende davon befestigt ist, die sich konzentrisch um den Schaft in Richtung des Schlauchendes davon erstreckt, die ein sinusförmiges Greif- und Dichtungsmittel aufweist, das einer modifizierten (Sinus x)/x-Welle (10 und 11) ähnelt, die innerhalb der Innenseite der Hülse gebildet ist, und die weiter ein Verstärkungsgreifmittel (12 und 13) aufweist, das innerhalb der Innenseite der Hülse gebildet ist, und
wobei der Schaft weiter eine komplementäre modifizierte (Sinus x)/x-Welle (14 und 15) aufweist, die zum Ermöglichen des sinusförmigen Greif- und Dichtungsmittels auf der Außenseite des Schafts gebildet ist, und weiter ein komplementäres Verstärkungsgreifmittel (16 und 17) aufweist, das auf der Außenseite des Schafts gebildet ist, und
wobei die modifizierte (Sinus x)/x-Welle eine Reihe von Knoten (10) und Flächen (11) umfasst, die axial innerhalb der Hülse ausgearbeitet sind, und wobei die komplementäre modifizierte (Sinus x)/x-Welle eine Reihe von Knoten (14) und Flächen (15) umfasst, die axial auf der Außenseite des Schafts ausgearbeitet sind, und
wobei die modifizierten (Sinus x)/x-Wellen derart positioniert sind, dass, wenn der Endverbinder auf den verstärkten Schlauch gestaucht wird, die modifizierten (Sinus x)/x-Wellen sich ausrichten, um das sinusförmige Greif- und Dichtungsmittel zu bilden, und weiter, dass, wenn der Endverbinder auf den verstärkten Schlauch gestaucht wird, der Verstärkungsgreifer innerhalb der Hülse und der komplementäre Verstärkungsgreifer auf dem Schaft zusammenwirken, um die Verstärkung des verstärkten Schlauchs fest zu greifen, und
wobei der Schaft eine längliche Stufe (19) aufweist, die innerhalb der Innenseite des Schafts gebildet ist, zum Zweck des Zusammenwirkens mit einem Ausdehnungsstopfen, wodurch der Schaft sich in den verstärkten Schlauch ausdehnt.

2. Endverbinder nach Anspruch 1, weiter umfassend einen inneren Rohrdamm (18), der innerhalb der Außenseite des Schafts zwischen der komplementären (Sinus x)/x-Welle (10, 11, 14 und 15) und dem komplementären Verstärkungsgreifmittel (12, 13, 16 und 17) gebildet ist, zum Zweck des Verhinderns von Kriechen des inneren Schichtelastomers des verstärkten Schlauchs in Richtung des Kupplungsendes.

3. Endverbinder nach Anspruch 1, wobei die Hülse eine Innenseite aufweist, die an dem Schaft nahe dem Kupplungsende des Schafts befestigt ist und die sich konzentrisch um den Schaft in Richtung des Schlauchendes davon erstreckt, wodurch ein kreisförmiger Hohlraum zwischen der Außenseite des Schaftes und der Innenseite der Hülse gebildet wird und ausgebildet ist, um ein Ende des verstärkten Schlauchs aufzunehmen, und wobei der Hohlraum in sechs Zonen unterteilt ist, eine erste Zone (1), die als ein Ausdehnungsbereich ausgebildet ist, eine zweite Zone (2), die als ein Stopp und ein erster Greifbereich ausgebildet ist, eine dritte Zone (3), die als ein zweiter Greifbereich ausgebildet ist, eine vierte Zone (4), die als ein dritter Greifbereich ausgebildet ist, eine fünfte Zone (5), die als ein vierter Greifbereich ausgebildet ist, und eine sechste Zone (6), die als ein Spannungsentlastungs- und Abschlussbereich ausgebildet ist, wobei die erste Zone (1) an dem Kupplungsende angeordnet ist und die sechste Zone (6) an dem Schlauchende angeordnet ist, wobei die zweite (2), die dritte (3), die vierte (4) und die fünfte (5) Zone axial und in numerischer Reihenfolge zwischen der ersten (1) und der sechsten (6) Zone liegen, und wobei der erste Greifbereich (2) zum Crimpen der Verstärkung zwischen der Hülse und dem Schaft ausgebildet ist, wobei der zweite Greifbereich (3) zum Greifen der Verstärkung zwischen der Hülse und dem Schaft ausgebildet ist, wobei der dritte Greifbereich (4) zum Crimpen der Verstärkung und des inneren Rohrs zwischen der Hülse und dem Schaft ausgebildet ist, wobei der vierte Greifbereich (5) zum Verriegeln der Verstärkung und des inneren Rohrs zwischen der Hülse und dem Schaft in einer modifizierten sinusförmigen Welle zwischen der Hülse und dem Schaft ausgebildet ist, und wobei der Spannungsentlastungs- und Abschlussbereich (1) zum vorsichtigen Abschließen des Schlauchs innerhalb des Endverbinders zwischen dem Außenkörper und dem inneren Rohr ausgebildet ist, und wobei der zweite Greifbereich (3) zwischen der Hülse, der Verstärkung und dem Schaft ein komplementäres mechanisches Verriegelungsmittel (12, 13, 16 und 17) umfasst.

4. Endverbinder nach Anspruch 3, wobei der vierte Greifbereich (5) zwischen der Hülse, der Verstärkung, dem inneren Rohr und dem Schaft ein sinusförmiges Verriegelungsmittel umfasst,

5. Endverbinder nach Anspruch 3, wobei der Übergang zwischen der fünften (5) und der sechsten (6) Zone einen spitzen Winkel einnimmt, um dadurch ein Kriechen des inneren Rohrs zu verhindern, das durch Hochtemperaturfluide verursacht wird, die sich innerhalb des verstärkten Schlauches bewegen.

6. Endverbinder nach Anspruch 3, weiter umfassend einen inneren Rohrdamm (18), der zwischen der dritten (3) und der vierten (4) Zone angeordnet ist, zum Zweck des Verhinderns von Kriechen des inneren Schichtelastomers des verstärkten Schlauchs in Richtung des Kupplungsendes.

7. Endverbinder nach Anspruch 6, wobei das sinusförmige Verriegelungsmittel eine Mehrzahl von Rillen (10) und Flächen (11) umfasst, die in der Hülse gebildet sind, und die eine Mehrzahl von Flächen (14) und Rillen (15) komplementieren, die in dem Schaft gebildet sind, sodass, wenn der Endverbinder dauerhaft an dem verstärkten Schlauch befestigt ist, die Verstärkung die Form einer modifizierten Sinuswelle annimmt, wodurch ein mechanisches Verriegeln zwischen der Hülse und dem Schaft erfolgt.

8. Endverbinder nach Anspruch 3, wobei die längliche Stufe (19), die innerhalb der Innenseite des Schafts gebildet ist, im Wesentlichen unter dem vierten (4) Greifbereich angeordnet ist und sich teilweise unter der fünften Zone (5) erstreckt.

9. Hochdruckverstärkte Schlauchanordnung zur Verwendung als ein rotierender Schlauch, umfassend:
einen Abschnitt von einem hochdruckverstärkten Gummischlauch mit einem ersten und einem zweiten Ende, einer Verstärkung, einer inneren Elastomerschicht, und einem Außenkörper;
einen ersten und einen zweiten Endverbinder nach einem der Ansprüche 1 bis 8, mit einer Hülse und einem Schaft und aufweisend, ein sinusförmiges Greifmittel (10, 11, 14 und 15) und ein Verstärkungsgreifmittel (12, 13, 16 und 17), die zwischen der Hülse und dem Schaft gebildet sind, und
wobei der erste Endverbinder dauerhaft an dem ersten Ende des Schlauchs befestigt ist, mit einer sinusförmigen Verriegelung zwischen dem ersten Endverbinder innerhalb des Bereichs des verstärkten Schlauchs, der die Verstärkung enthält, und der inneren Elastomerschicht an dem ersten Ende des Schlauchs, und mit einer Verstärkungsgreiferverriegelung für die Verstärkung des verstärkten Schlauchs auch an dem ersten Ende des Schlauchs, und
wobei der zweite Endverbinder dauerhaft an dem zweiten Ende des Schlauchs befestigt ist, wobei eine ähnliche sinusförmige Verriegelung und eine ähnliche Verstärkungsverriegelung zwischen dem zweiten Endverbinder und dem zweiten Ende des Schlauchs gebildet wird.

10. Hochdruckverstärkte Schlauchanordnung nach Anspruch 9, wobei der Schlauch vor der dauerhaften Befestigung an den Endverbindern zuerst geschält wird, durch Entfernen eines Teils des Außenkörpers und eines Teils der inneren Elastomerschicht, wodurch die Verstärkung freigelegt wird, und wobei die Verstärkung in Kontakt mit der Hülse kommt, in den Teilen der Endverbinder, die das sinusförmige Greifmittel (10, 11, 14 und 15) enthalten, und wobei das innere Gummi im Kontakt mit dem Schaft ist, in dem Teil der Endverbinder, der das sinusförmige Greifmittel (10, 11, 14 und 15) enthält, und wobei die Verstärkung in Kontakt mit den Verstärkungsgreifmitteln (12, 13, 16 und 17) kommt, sowohl in der Hülse, als auch in dem Schaft.

11. Hochdruckverstärkte Schlauchanordnung, umfassend:
einen Abschnitt von einem hochdruckverstärkten Schlauch mit einem ersten und einem zweiten Ende, einer Verstärkung, einem inneren Rohr, einer Verstärkung einer äußeren Schicht und eine Bedeckung, die den Außenkörper bilden;
einen ersten und einen zweiten Endverbinder nach einem der Ansprüche 1 bis 8, mit einer Hülse und einem Schaft; und
wobei der Schlauch vor der dauerhaften Befestigung an den Endverbindern zuerst geschält wird, durch Entfernen eines Teils des Außenkörpers und eines Teils des inneren Rohrs, wodurch die Verstärkung vollständig freigelegt wird, wodurch der Verstärkung ermöglicht wird, in direkten Kontakt mit der Hülse und dem Schaft zu kommen; und
wobei ein zusätzlicher Teil des Außenkörpers entfernt wird, wodurch nur der Verstärkung ermöglicht wird, in direkten Kontakt mit der Hülse zu kommen, und wobei die beiden Verbinder eine Mehrzahl von Greifmitteln aufweisen, die zwischen der Hülse und dem Schaft gebildet sind, von denen es ein erstes Verstärkungsgreifmittel (12, 13, 16 und 17) gibt und ein zweites sinusförmiges Greifmittel (10, 11, 14 und 15) gibt, die durch einen inneren Rohrdamm (18) voneinander getrennt sind; und
wobei der erste Endverbinder dauerhaft an dem ersten Ende des Schlauchs befestigt ist, wodurch eine mechanische Verriegelung zwischen dem ersten Ende des Schlauchs und dem ersten Endverbinder, bei dem ersten Verstärkungsgreifmittel (12, 13, 16 und 17) davon, direkt mit der Verstärkung gebildet wird; und
wobei der erste Verbinder weiter dauerhaft an dem zweiten sinusförmigen Greifmittel (10, 11, 14 und 15) zwischen der Hülse, der Verstärkung, dem inneren Rohr und dem Schaft befestigt ist, wodurch eine sinusförmige Verriegelung gebildet wird; und
wobei der zweite Endverbinder dauerhaft an dem zweiten Ende des Schlauchs befestigt ist, wodurch eine mechanische Verriegelung zwischen dem ersten Ende des Schlauchs und dem ersten Endverbinder, bei dem ersten Verstärkungsgreifmittel (12, 13, 16 und 17) davon, direkt mit der Verstärkung gebildet wird; und
wobei der erste Verbinder weiter dauerhaft an dem zweiten sinusförmigen Greifmittel (10, 11, 14 und 15) zwischen der Hülse, der Verstärkung, dem inneren Rohr und dem Schaft befestigt ist, wodurch eine sinusförmige Verriegelung gebildet wird.

12. Hochdruckverstärkte Schlauchanordnung nach Anspruch 11, wobei der Abschnitt von dem hochdruckverstärkten Schlauch weiter Hochtemperatur- und Hochdruckbewertungen aufweist, wobei ein Kriechen des inneren Rohrs innerhalb des Abschnitts von dem hochdruckverstärkten Schlauch dadurch verhindert wird, dass der innere Rohrdamm (18) in Verbindung mit der sinusförmigen Verriegelung innerhalb jedes der Endverbinder agiert, wodurch der hochdruckverstärkten Schlauchanordnung ermöglicht wird, bei der bewerteten Temperatur und dem bewerteten Druck des Abschnitts von dem hochdruckverstärkten Schlauch zu arbeiten.

13. Hochdruck- und hochtemperaturverstärkte Schlauchanordnung nach Anspruch 12, weiter aufweisend einen Spannungsentlastungs- und Abschlussbereich (1), wodurch weitere Mittel zum Verhindern von Kriechen des inneren Rohrs und des Außenkörpers vorgesehen sind.

## Revendications

1. Raccord d'extrémité pour fixation permanente à un tuyau renforcé possédant un renfort, comprenant : une tige possédant une extrémité de couplage, une extrémité de tuyau, une partie intérieure et une partie extérieure ; une virole possédant une partie intérieure arrimée à ladite partie extérieure de ladite tige à proximité de ladite extrémité de couplage de celle-ci s'étendant concentriquement autour de ladite tige vers ladite extrémité de tuyau de celle-ci possédant des moyens de serrage et d'étanchéité sinusoïdaux ressemblant à une onde (sinus x)/x modifiée (10 et 11) formés dans ladite partie intérieure de ladite virole et possédant en outre des moyens de serrage de renfort (12 et 13) formés dans ladite partie intérieure de ladite virole, et dans lequel ladite tige incorpore une onde (sinus x)/x modifiée complémentaire (14 et 15) formée sur ladite partie extérieure de ladite tige pour activer lesdits moyens de serrage et d'étanchéité sinusoïdaux et incorpore en outre des moyens de serrage de renfort complémentaires (16 et 17) formés sur ladite partie extérieure de ladite tige et dans lequel ladite onde (sinus x)/x modifiée comprend une série de noeuds (10) et de méplats (11) usinés axialement dans ladite virole et ladite onde (sinus x)/x modifiée complémentaire comprend une série de noeuds (14) et de méplats (15) usinés axialement sur ladite partie extérieure de ladite tige et dans lequel lesdites ondes (sinus x)/x modifiées sont positionnées de telle sorte que quand ledit raccord d'extrémité est embouti sur le tuyau renforcé, lesdites ondes (sinus x)/x modifiées s'alignent pour former lesdits moyens de serrage et d'étanchéité sinusoïdaux et qu'en outre quand ledit raccord d'extrémité est embouti sur le tuyau renforcé ledit élément de serrage de renfort dans ladite virole et ledit élément de serrage de renfort complémentaire sur ladite tige interagissent pour serrer fermement le renfort du tuyau renforcé et dans lequel ladite tige possède un cran allongé (19) formé dans ladite partie intérieure de ladite tige dans le but d'interagir avec un bouchon de dilatation dilatant ainsi ladite tige dans le tuyau renforcé.

2. Raccord d'extrémité selon la revendication 1 comprenant en outre un barrage de tube interne (18) formé dans ladite partie extérieure de ladite tige entre ladite onde (sinus x)/x complémentaire (10, 11, 14 et 15) et lesdits moyens de serrage de renfort complémentaires (12, 13, 16 et 17) dans le but d'inhiber le fluage de l'élastomère de couche interne du tuyau renforcé vers ladite extrémité de couplage.

3. Raccord d'extrémité selon la revendication 1, dans lequel la virole possédant une partie intérieure arrimée à ladite tige à proximité de ladite extrémité de couplage de la tige et s'étendant concentriquement autour de ladite tige vers ladite extrémité de tuyau de celle-ci formant ainsi une cavité circulaire entre ladite partie extérieure de la tige et ladite partie intérieure de ladite virole et adaptée pour recevoir une extrémité du tuyau renforcé et dans lequel ladite cavité est divisée en six zones, une première zone (1) adaptée en tant que région de dilatation, une deuxième zone (2) adaptée en tant que butée et première région de serrage, une troisième zone (3) adaptée en tant que deuxième région de serrage, une quatrième zone (4) adaptée en tant que troisième région de serrage, une cinquième zone (5) adaptée en tant que quatrième région de serrage et une sixième zone (6) adaptée en tant que région de détente et de terminaison dans lequel ladite première zone (1) est située à ladite extrémité de couplage et ladite sixième zone (6) est située à ladite extrémité de tuyau avec lesdites deuxième (2), troisième (3), quatrième (4) et cinquième (5) zones placées axialement et en ordre numérique entre lesdites première (1) et sixième (6) zones et dans lequel ladite première région de serrage (2) est adaptée pour sertir le renfort entre ladite virole et ladite tige, dans lequel ladite deuxième région de serrage (3) est adaptée pour serrer le renfort entre ladite virole et ladite tige, dans lequel ladite région de serrage (4) est adaptée pour sertir le renfort et le tube interne entre ladite virole et ladite tige, dans lequel ladite quatrième région de serrage (5) est adaptée pour verrouiller le renfort et le tube interne entre ladite virole et ladite tige dans une onde sinusoïdale modifiée entre ladite virole et ladite tige, et dans lequel ladite région de détente et de terminaison (1) est adaptée pour terminer doucement le tuyau dans le raccord d'extrémité entre les blindage externe et tube interne et dans lequel ladite deuxième région de serrage (3) comprend des moyens de verrouillage mécanique complémentaires (12, 13, 16 et 17) entre ladite virole, le renfort, et ladite tige.

4. Raccord d'extrémité selon la revendication 3 dans lequel ladite quatrième région de serrage (5) comprend un moyen de verrouillage sinusoïdal modifié entre ladite virole, le renfort, le tube interne, et ladite tige.

5. Raccord d'extrémité selon la revendication 3 dans lequel la transition entre lesdites cinquième (5) et sixième (6) zones adopte un angle aigu agissant ainsi pour limiter le fluage du tube interne provoqué par des fluides à température élevée circulant dans le tuyau renforcé.

6. Raccord d'extrémité selon la revendication 3 comprenant en outre un barrage de tube interne (18) situé entre lesdites troisième (3) et quatrième (4) zones dans le but d'inhiber le fluage de l'élastomère de couche interne du tuyau renforcé vers ladite extrémité de couplage.

7. Raccord d'extrémité selon la revendication 6 dans lequel ledit moyen de verrouillage sinusoïdal comprend une pluralité de cannelures (10) et de méplats (11) formés dans ladite virole qui complètent une pluralité de méplats (14) et de cannelures (15) formés dans ladite tige de sorte que lorsque ledit raccord d'extrémité est fixé de façon permanente au tuyau renforcé le renfort adopte la forme d'une onde sinusoïdale modifiée verrouillant ainsi mécaniquement entre ladite virole et ladite tige.

8. Raccord d'extrémité selon la revendication 3 dans lequel le cran allongé (19) est formé dans ladite partie intérieure de ladite tige située essentiellement sous ladite quatrième (4) région de serrage et s'étendant partiellement sous ladite cinquième zone (5).

9. Ensemble de tuyau renforcé à pression élevée pour une utilisation en tant que tuyau rotatif comprenant : une section de tuyau de caoutchouc renforcé à pression élevée possédant des première et seconde extrémités, un renfort, une couche élastomère interne, et un blindage externe ; un premier et un second raccord d'extrémité tels que revendiqués dans l'une quelconque des revendications 1 à 8, incorporant une virole et une tige et possédant un moyen de serrage sinusoïdal (10, 11, 14 et 15) et des moyens de serrage de renfort (12, 13, 16 et 17) formés entre lesdites virole et tige et dans lequel ledit premier raccord d'extrémité est fixé de façon permanente à ladite première extrémité dudit tuyau incorporant un verrou sinusoïdal entre ledit premier raccord d'extrémité dans la région du tuyau renforcé contenant le renfort et la couche élastomère interne à ladite première extrémité dudit tuyau et incorporant un verrou à serrage de renfort pour le renfort dudit tuyau renforcé également à ladite première extrémité dudit tuyau et dans lequel ledit second raccord d'extrémité est fixé de façon permanente à ladite seconde extrémité dudit tuyau formant ainsi un verrou sinusoïdal similaire et un verrou de renfort similaire entre ledit second raccord d'extrémité et ladite seconde extrémité dudit tuyau.

10. Ensemble de tuyau renforcé à pression élevée selon la revendication 9 dans lequel le tuyau est d'abord dénudé avant fixation permanente aux raccords d'extrémité par élimination d'une partie du blindage externe et d'une partie de la couche élastomère interne exposant ainsi le renfort et dans lequel le renfort vient en contact avec ladite virole dans les parties des raccords d'extrémité contenant ledit moyen de serrage sinusoïdal (10, 11, 14 et 15) et dans lequel le caoutchouc interne est en contact avec ladite tige dans la partie des raccords d'extrémité contenant le moyen de serrage sinusoïdal (10, 11, 14 et 15) et dans lequel le renfort vient en contact avec les moyens de serrage de renfort (12, 13, 16 et 17) à la fois dans ladite virole et ladite tige.

11. Ensemble de tuyau renforcé à pression élevée comprenant : une section de tuyau renforcé à pression élevée possédant des première et seconde extrémités, un renfort, un tube interne, un renfort, une couche externe et une couverture formant un blindage externe ; un premier et un second raccord d'extrémité tels que revendiqués dans l'une quelconque des revendications 1 à 8, incorporant une virole et une tige ; et dans lequel le tuyau est d'abord dénudé aux deux extrémités avant fixation permanente aux raccords d'extrémité par élimination d'une partie des blindage externe et tube interne exposant ainsi entièrement le renfort permettant ainsi au renfort de venir en contact direct avec ladite virole et ladite tige ; et dans lequel une partie supplémentaire du blindage externe est éliminée permettant ainsi seulement au renfort de venir en contact direct avec la virole et dans lequel lesdits raccords ont chacun une pluralité de moyens de serrage formés entre lesdites virole et tige parmi lesquels se trouvent un premier moyen de serrage de renfort (12, 13, 16 et 17) et un second moyen de serrage sinusoïdal (10, 11, 14 et 15) séparés par un barrage de tube interne (18) ; et dans lequel ledit premier raccord d'extrémité est fixé de façon permanente à ladite première extrémité dudit tuyau formant ainsi un verrou mécanique entre ladite première extrémité dudit tuyau et ledit premier raccord d'extrémité au niveau desdits moyens de serrage de renfort (12, 13, 16 et 17) de celui-ci directement sur le renfort; et dans lequel ledit premier raccord d'extrémité est fixé en outre de façon permanente au niveau dudit moyen de serrage sinusoïdal (10, 11, 14 et 15) entre lesdits virole, renfort, tube interne et tige formant ainsi un verrou sinusoïdal ; et dans lequel ledit second raccord d'extrémité est fixé de façon permanente à ladite seconde extrémité dudit tuyau formant ainsi un verrou mécanique entre ladite première extrémité dudit tuyau et ledit premier raccord d'extrémité au niveau desdits moyens de serrage de renfort (12, 13, 16 et 17) de celui-ci directement sur le renfort ; et dans lequel ledit premier raccord est fixé en outre de façon permanente au niveau dudit second moyen de serrage sinusoïdal (10, 11, 14 et 15) entre lesdits virole, renfort, tube interne et tige formant ainsi un verrou sinusoïdal.

12. Ensemble de tuyau renforcé à pression élevée selon la revendication 11, ladite section de tuyau renforcé à pression élevée possédant en outre des valeurs nominales de température élevée et de pression élevée, dans lequel le fluage dudit tube interne dans ladite section de tuyau renforcé à pression élevée est inhibé par ledit barrage de tube interne (18) agissant conjointement avec ledit verrou sinusoïdal dans chacun desdits raccords d'extrémité permettant ainsi audit ensemble à pression élevée de fonctionner aux température et pression nominales de ladite section de tuyau renforcé.

13. Ensemble de tuyau renforcé à pression élevée et à température élevée selon la revendication 12 possédant en outre une région de détente et de terminaison (1) fournissant ainsi d'autres moyens pour empêcher le fluage dudit tube intérieur et de ladite carcasse extérieure.
